# EUROPÄISCHE PATENTANMELDUNG

(11) **EP 1 082 912 A2**
(43) Veröffentlichungstag der Anmeldung: **14.03.2001**
(21) Anmeldenummer: 00115845.0
(22) Anmeldetag: 24.07.2000
(51) Int. Cl.: A23N 12/02

(54) **Trenn- und Überleitwalze für Knollenfrüchte, insbesondere Kartoffeln**

(30) Priorität: 07.09.1999 DE 19942482
(71) Anmelder: Franz Grimme Landmaschinenfabrik GmbH & Co. KG., D-49401 Damme (DE)
(72) Erfinder: Kalverkamp, Klemens, 49401 Damme (DE)
(74) Vertreter: Busse & Busse Patentanwälte

(57) **Zusammenfassung**

Die Trenn- und Überleitwalze für Knollenfrüchte, insbesondere Kartoffeln, ist mit einem profilierten, einen Innenteil umgebenden Mantelteil versehen, das Mantelteil (1;20) elatisch nachgiebig ausgebildet und bereichsweise einwärts ausweichbar auf dem Innenteil (2;21) abgestützt ist.

## Beschreibung

Die Erfindung bezieht sich auf eine Trenn- und Überleitwalze für Knollenfrüchte, insbesondere Kartoffeln, mit einem profilierten, einen Innenteil umgebenden Mantelteil.

Walzen der genannten Art kommen in Fördervorrichtungen zum Einsatz, die auf die Knollenfrüchte einen diese von anhaftendem Erdreich trennende reinigende Wirkung ausüben sollen. Derartige Trenn- und Reinigungsvorrichtungen finden z.B. Anwendung als Übergänge von Schüttbunkern zu Lagerhäusern oder auch vor Sammelbunkern von Kartoffelvollerntemaschinen. Neben Glattwalzen finden dabei auch Rippenwalzen Anwendung, bei denen beispielsweise das Mantelteil aus Gummi auf einem zylindrischen Rohrkörper aus Metall als Trägerteil aufgezogen ist. Beim Überlaufen solcher verhältnismäßig harter Walzen erfahren die Knollenfrüchte, namentlich die besonders empfindlichen Kartoffeln, häufig unerwünschte Beschädigungen. Bei klebrigem Erdreich ist auch zu beobachten, daß die Walzen zunehmend Erdreich in den Vertiefungsbereichen anlagern, schließlich ganz zuwachsen und dementsprechend ihre Reinigungswirkung verlieren.

Die Erfindung befaßt sich mit dem Problem eine Walze der eingangs genannten Art zu schaffen, die bei Einsatz in einer Trenn- und Reinigungsvorrichtung schonend auf die Knollenfrüchte einwirkt und dabei eine verbesserte Reinigungswirkung entfaltet, die auch durch den Ansatz klebrigen Erdreichs nicht nennenswert gemindert wird.

Die Erfindung löst das Problem mit einer Walze mit den Merkmalen des Anspruchs 1. Hinsichtlich wesentlicher weiterer Ausgestaltungen wird auf die Ansprüche 2 bis 17 verwiesen.

Bei der erfindungsgemäßen Walze ist durch die elastisch nachgiebige Ausbildung und bereichsweise einwärts ausweichbare Abstützung des Mantelteils sichergestellt, daß Knollenfrüchte, vor allem Kartoffeln, bei ihrem Überlaufen der Walze weich abgestützt werden, so daß Beschädigungen minimiert sind. Die ausweichbare Abstützung eines großen Teils des Walzenmantels führt zudem zu einer kräftigen Walkarbeit, die nicht nur die Reinigungswirkung verbessert, sondern auch einen Selbstreinigungseffekt hervorruft, der einem Zusetzen der Profile durch anhaftendes Erdreich entgegenwirkt.

Weitere Einzelheiten und Wirkungen ergeben sich aus der nachfolgenden Beschreibung und der Zeichnung, in der mehrere Ausführungsbeispiele des Gegenstands der Erfindung schematisch näher veranschaulicht sind. In der Zeichnung zeigen:
- Fig. 1: eine Ansicht eines Segments einer Walze nach der Erfindung in einer ersten Ausführung,
- Fig. 2: eine Stirnansicht zu Fig. 1,
- Fig. 3: einen Schnitt nach der Linie III-III in Fig. 2,
- Fig. 4: eine Stirnansicht der Walze nach Fig. 1 bis 3 mit eingesetztem Trägerkörper,
- Fig. 5: eine Ansicht eines Segments einer Walze nach der Erfindung in einer zweiten Ausführung in verkleinertem Maßstab,
- Fig. 6: eine Schnittdarstellung gemäß der Linie VI-VI in Fig. 5,
- Fig 7: eine perspektivische Darstellung eines Segments einer Walze nach der Erfindung in einer dritten Ausführung in verkleinertem Maßstab,
- Fig. 8: eine Darstellung des Segments in Fig. 7 in einer Seitenansicht in der oberen Hälfte und einem Längsschnitt in der unteren Hälfte, und
- Fig. 9: eine Querschnittdarstellung zu Fig. 8.

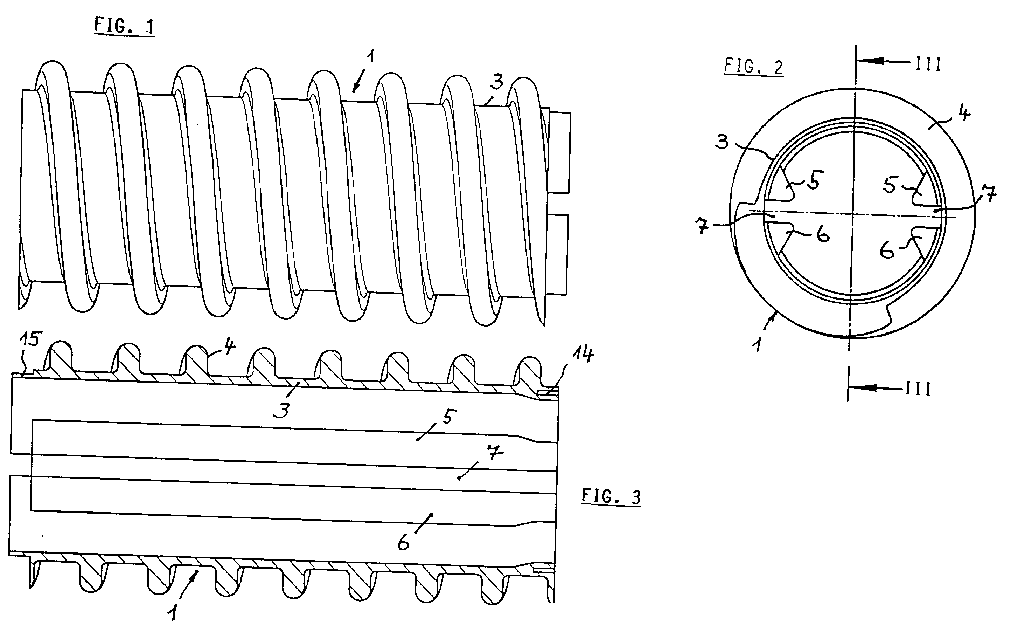

Die in der Zeichnung veranschaulichte Trenn- und Überleitwalze besteht bei der Ausführung gemäß Fig. 1 bis 4 aus einem gesonderten Mantelteil 1 und einem gesonderten Innenteil, das als Trägerkörper 2 ausgebildet ist, der an diametral gegenüberliegenden Stützstellen mit dem Mantelteil 1 in Eingriff steht.

Das Mantelteil 1 besteht aus elastisch nachgiebigem Material und hat einen relativ dünnwandigen, zylindrischen Basisteil 3, der an seiner Außenseite mit einer wendel- bzw. schraubenlinienförmigen Rippe versehen ist. An seiner Innenseite weist das Mantelteil 1 angeformte Ansätze 5,6 für einen drehmoment-übertragenden, formschlüssigen Eingriff mit dem Innenteil auf, die zwischen sich einen Schlitz 7 begrenzen.

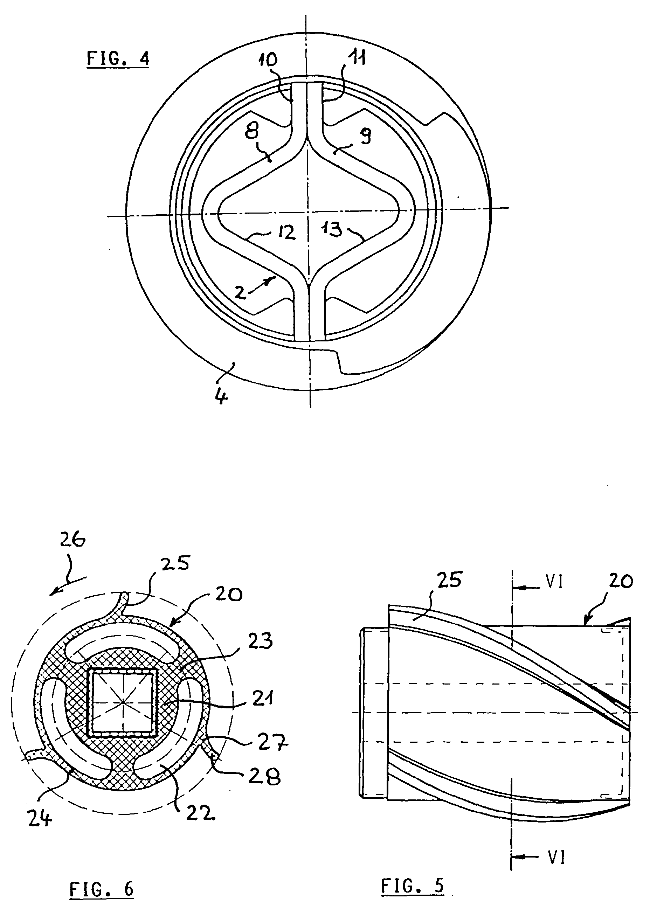

Der das Innenteil bildende Trägerkörper 2 ist bei der Ausführung nach Fig. 4 von zwei untereinander gleichen Formblechen 8,9 gebildet, die mit geraden, diametralen Flanschbereichen 10,11 aneinanderliegen, die endseitig das Mantelteil 1 tragen. Die Flanschbereiche 10,11 gehen in V-förmige Mittelteile 12,13 über, die aneinander entgegengesetzt gerichtet und mit ihren Scheitellinien in geringem Abstand vor der Innenseite des Mantelteils 1 bzw. des Basis-teils 3 gelegen sind. Die Abmessung der Teile 8,9 kann so gewählt sein, daß sie bei ihrer Abstützung des Mantelteils 1 diesem eine leichte Ovalform verleihen. Die Differenz der Achslängen kann dabei in einem Bereich von 1 bis 5 mm liegen und beträgt vorzugsweise 2 mm. Der Trägerkörper 2 kann ferner so gestaltet sein, daß er der Walze eine geringfügig exzentrische Drehachse vorgibt.

Das Mantelteil 1 setzt sich vorzugsweise aus mehreren koaxial aneinander anschließenden Segmenten zusammen, wobei das in Fig. 1 bis 3 veranschaulichte Segment einseitig mit einer Nut 14 in ihrer einen Stirnseite und mit einer umlaufenden Feder 15 an ihrer gegenüberliegenden Stirnseite versehen ist, die in Zusammenbaustellung jeweils mit Nut und Feder benachbarter Segmente in Eingriff stehen.

Durch die Abstützung des Mantelteils 1 an lediglich diskreten Stützstellen bzw. Stützlinien kann das Mantelteil 1 im Bereich zwischen den Abstützungen einwärts ausweichen und bei Überlaufen durch Knollenfrüchte wie Kartoffeln eine ständig ein- und auswärts gerichtete Walkbewegung ausführen, durch die nicht nur Stoßbeanspruchungen der Kartoffeln vermieden werden, sondern auch eine intensivere Reinigungswirkung entfaltet wird, die zugleich mit einem Selbstreinigungseffekt der Walze verbunden ist.

Die Ausführungsform in Fig. 5 und 6 veranschaulicht ein Mantelteil 20, das mit seinem Innenteil 21 einen integralen Formkörper bildet. In diesem Formkörper sind Ausnehmungen 22, in Fig. 6 drei an der Zahl, vorgesehen, die jeweils einen Teil des Umfangs des Formkörpers einnehmen und sich axial durchgehend über die Walzenlänge erstrecken. Diese Ausnehmungen 22 sind im Querschnitt bei der Ausführung nach Fig. 6 bogenschlitzförmig ausgebildet und umfangsseitig lediglich durch Zwischenstege 23 voneinander getrennt. Die Außenwandungen 24 der Ausnehmungen sind im Betrieb der Walze ebenfalls einwärts ausweichbar, so daß auch hier die Walze eine weitgehend elastische nachgiebige Arbeitsfläche darbietet.

Das Mantelteil 20 umfaßt ebenfalls wendelförmige Rippen 25, wobei im Bereich jeweils einer Außenwandung 24 einer Ausnehmung 22 zumindest eine Rippe 25 vorgesehen ist. Im Gegensatz zu der Rippe 4 bei der Ausführung nach Fig. 1 bis 4, welche den Basisteil 3 eingängig in engen Windungen umläuft, ist die Rippe 25 eine solche mit großer Steigung, so daß sie sich innerhalb einer Segments lediglich über einen Zentriwinkel von beispielsweise etwa 90° erstreckt. Bei derartiger Gestaltung der Rippen 25 ist das Walzensegment mit einer mehrgängigen Verrippung, beispielsweise mit vier Rippen 25, versehen.

Die Rippen 25 haben einen entgegen Drehrichtung 26 der Walze etwa tangential verlaufenden Fußteil 27 und einen sich daran anschließenden, bogenförmig in die Radialrichtung übergehenden Arbeitsteil 28. Derartige Lippen sind besonders weich, ihrerseits ausweichbar und üben auf mit Erdreich behaftete Knollenfrüchte eine besonders hohe Reinigungswirkung aus.

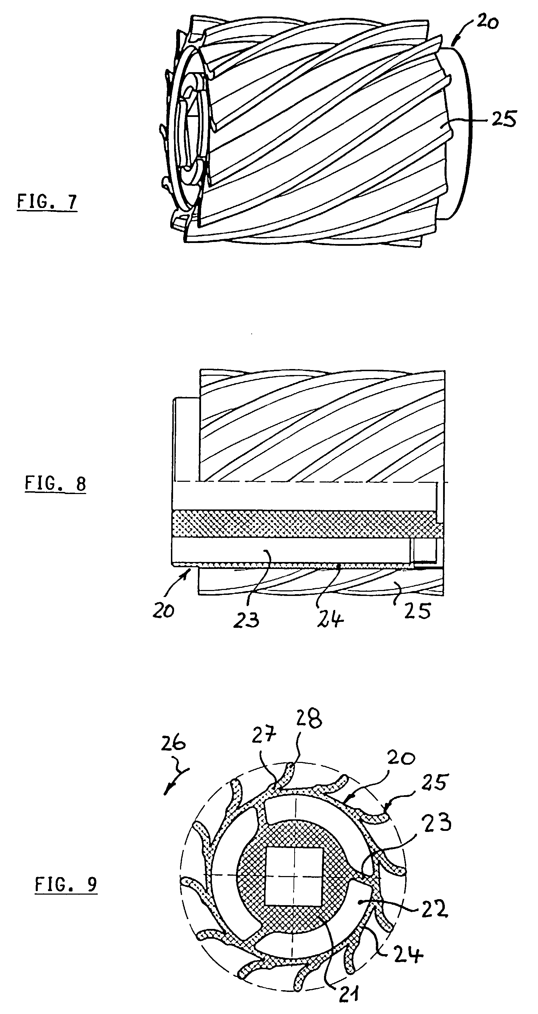

Bei der Ausführung nach Fig. 7 bis 9 sind die Stege 23 zwischen den Ausnehmungen 22 besonders dünn und zudem entgegen Drehrichtung 26 zur Radial-ebene geneigt, so daß sie bei radial einwärts wirkender Belastung sich entgegen Drehrichtung 26 verlagern können und ihrerseits ein an der Stoßdämpfung mitwirkendes Teil bilden. Über die Außenwand 24 jeder Ausnehmung 22 erstrecken sich hier vier Rippen 25, so daß die Walze mit Segmenten gemäß Fig. 7 bis 9 eine insgesamt 12-gängige Verrippung aufweist.

Die Mantelteile 1,20 bestehen aus weichelastischem Material, z.B. Polyurethan mit einer Härte von 25 bis 75 shore A, vorzugsweise etwa 35 shore A. Die Rippen 4,25 erteilen überlaufenden Knollenfrüchten nicht nur eine Bewegung in Umfangsrichtung, sondern auch eine axiale Bewegungskomponente, wobei eine sich aus beispielsweise 6 bis 12 Segmenten zusammensetzende Walze Segmente umfaßt, die den Knollenfrüchten jeweils unterschiedlich gerichtete axiale Bewegungskomponenten vermitteln, um die Reinigungswirkung auf die Knollenfrüchte noch zusätzlich zu erhöhen. Wenn wie üblich Walzen erfindungsgemäßer Ausbildung Bestandteil einer Trenn- und Reinigungsvorrichtung bilden, in der mehrere Walzen quer zur Förderrichtung hintereinander angeordnet, drehbar gelagert und mittels eines Antriebs in Umlauf versetzbar sind, dann können die Rippen von in Förderrichtung benachbarten Walzen eine Ausrichtung haben, die den Kartoffeln beim Übergang von einer Walze zur nachfolgenden Walze jeweils eine entgegengesetzte axiale Richtungskomponente vermitteln.

## Patentansprüche

1. Trenn- und Überleitwalze für Knollenfrüchte, insbesondere Kartoffeln, mit einem profilierten, einen Innenteil umgebenden Mantelteil, **dadurch gekennzeichnet,** daß das Mantelteil (1;20) elatisch nachgiebig ausgebildet und bereichsweise einwärts ausweichbar auf dem Innenteil (2;21) abgestützt ist.

2. Walze nach Anspruch 1, **dadurch gekennzeichnet,** daß das Mantelteil (1) als gesondertes Formteil ausgebildet und auf einem Trägerkörper (2) als Innenteil abgestützt ist, der an diskreten Stützstellen mit dem Manteilteil (1) in Eingriff steht und zwischen den Stützstellen im Abstand zu dem Mantelteil (1) verläuft.

3. Walze nach Anspruch 2, **dadurch gekennzeichnet,** daß der Trägerkörper (2) von zwei untereinander gleichen Formblechen (8,9) gebildet ist, die mit geraden, diametralen Flanschbereichen (10,11) aneinanderliegen und das Mantelteil (1) tragen und entgegengesetzt gerichtete V-förmige Mittelteile (12,13) aufweisen, deren Scheitellinien im Abstand vor der Innenseite des Mantelteils (1) verlaufen.

4. Walze nach einem der Ansprüche 1 bis 3, **dadurch gekennzeichnet,** daß das Mantelteil (1) innenseitig angeformte Ansätze (5,6) für einen drehmomentübertragenden, formschlüssigen Eingriff mit dem Innenteil (2) aufweist.

5. Walze nach Anspruch 4, **dadurch gekennzeichnet,** daß die Ansätze (5,6) zwischen sich einen Schlitz (7) für die Aufnahme der Flanschbereiche (10,11) der Formbleche (8,9) darbieten.

6. Walze nach einem der Ansprüche 1 bis 5, **dadurch gekennzeichnet,** daß die Abstützung durch den Innenteil (2) dem Mantelteil (1) eine Ovalform verleiht.

7. Walze nach einem der Ansprüche 1 bis 6, **dadurch gekennzeichnet,** daß das Innenteil (2) der Walze eine exzentrische Drehachse vorgibt.

8. Walze nach einem der Ansprüche 1 bis 7, **dadurch gekennzeichnet,** daß das Mantelteil (1;20) aus koaxial aneinander anschließenden Mantelsegmenten zusammengesetzt ist.

9. Walze nach Anspruch 1, **dadurch gekennzeichnet,** daß das Mantelteil (20) und das Innenteil (21) einen integralen Formkörper bilden, in dem sich axial erstreckende, einen Teil des Umfangs des Formkörpers einnehmende Ausnehmungen (22) angeordnet sind, deren Außenwandung (24) einwärts ausweichbar ist.

10. Walze nach Anspruch 9, **dadurch gekennzeichnet,** daß die Ausnehmungen (22) im Querschnitt bogenschlitzförmig ausgebildet und umfangsseitig lediglich durch Zwischenstege (23) voneinander getrennt sind.

11. Walze nach einem der Ansprüche 1 bis 10, **dadurch gekennzeichnet,** daß die Profilierung des Mantelteils (1;20) den die Walze überlaufenden Knollenfrüchten eine axiale Bewegungskomponente aufprägt.

12. Walze nach Anspruch 11, **dadurch gekennzeichnet,** daß die Walze Mantelsegmente umfaßt, die den überlaufenden Knollenfrüchten unterschiedlich gerichtete axiale Bewegungskomponenten vermitteln.

13. Walze nach einem der Ansprüche 1 bis 12, **dadurch gekennzeichnet,** daß die Profilierung des Mantelteils (1;20) von wendelförmigen Rippen (4;25) gebildet ist.

14. Walze nach einem der Ansprüche 9 und 13, **dadurch gekennzeichnet,** daß sich über die Außenwandung (24) der Ausnehmungen (22) zumindest eine Rippe (25) erstreckt.

15. Walze nach Anspruch 14, **dadurch gekennzeichnet,** daß die Rippen (25) einen entgegen Drehrichtung (26) der Walze etwa tangential verlaufenden Fußteil (27) und einen sich daran anschließenden, bogenförmig in die Radialrichtung übergehenden Arbeitsteil (28) aufweisen.

16. Walze nach einem der Ansprüche 1 bis 15, **dadurch gekennzeichnet,** daß das Mantelteil (1;20) aus Polyurethan mit einer Härte von 25 bis 75 shore A, vorzugsweise etwa 35 shore A, besteht.

17. Walze nach einem der Ansprüche 1 bis 16, **dadurch gekennzeichnet,** daß sie Bestandteil einer Trenn- und Reinigungsvorrichtung bildet, in der mehrere Walzen quer zur Förderrichtung hintereinander angeordnet, drehbar gelagert und mittels eines Antriebs in Umlauf versetzbar sind.
